# EUROPÄISCHE PATENTSCHRIFT

(11) **EP 2 929 976 B1**
(45) Veröffentlichungstag und Bekanntmachung des Hinweises auf die Patenterteilung: **09.01.2019**
(21) Anmeldenummer: 15162765.0
(22) Anmeldetag: 08.04.2015
(51) Int. Cl.: B23K 35/38, B23K 26/12, B23K 103/04, B23K 26/14, B23K 26/34

(54) **VERFAHREN ZUM CO2-LASER-SCHWEISSEN VON HOCHLEGIERTEN STÄHLEN**
METHOD FOR CO2 LASER WELDING OF HIGH ALLOY STEELS
PROCÉDÉ DE SOUDAGE PAR LASER CO2 D'ACIERS À ALLIAGE ÉLEVÉ

(30) Priorität: 08.04.2014 DE 102014005194
(43) Veröffentlichungstag der Anmeldung: 14.10.2015
(73) Patentinhaber: Messer Group GmbH, 65812 Bad Soden (DE)
(72) Erfinder: Rockser, Mario, 17498 Hinrichshagen (DE); Wankum, Achim, 47809 Krefeld (DE); Wolters, Michael, 47058 Duisburg (DE)
(74) Vertreter: Münzel, Joachim R.

(56) Entgegenhaltungen:
- EP-A1- 1 160 048
- EP-A2- 1 022 087
- EP-B1- 1 084 788
- WO-A1-02/070192
- DE-B4- 19 616 844
- DE-C1- 4 315 849
- JP-A- 2000 197 971
- DATABASE WPI Week 201370 17. Oktober 2013 (2013-10-17) Thomson Scientific, London, GB; AN 2013-R21591 XP002742908, -& JP 2013 212532 A (IWATANI GAS KK) 17. Oktober 2013 (2013-10-17) -& JP 2013 212532 A (IWATANI IND GASES CORP) 17. Oktober 2013 (2013-10-17)

## Beschreibung

Die Erfindung betrifft ein Verfahren zum Laserschweißen eines metallischen Werkstücks unter Verwendung eines CO₂-Lasers, bei dem während des Schweißens die Schweißstelle von einem Schutzgas umspült wird.

In der industriellen Anwendung sind zahlreichen Schweißgase für das Schweißen unter Schutz- bzw. Prozessgasen bekannt, wobei je nach der Zusammensetzung des zu schweißenden Werkstücks, der jeweiligen Schweißaufgabe und des jeweils angewandten Schweißverfahrens unterschiedliche Gase oder Gasgemische zum Einsatz kommen.

Beim Laserstrahlschweißen muss das Prozessgas verschiedene Aufgaben erfüllen. Es soll einerseits im Schweißbereich unerwünschte Reaktionen der Umgebungsatmosphäre mit dem Werkstück verhindern, es soll einen positiven Effekt auf die Schmelzmetallurgie ausüben und darf unter der Strahlenbelastung des Lasers kein Plasma bilden. In der Regel wird das Prozessgas durch eine Düse koaxial zum Laserstrahl gerichtet zugeführt, unter Umständen kann jedoch statt dessen oder zusätzlich auch eine transversal zum Laserstrahl gerichtete zweite Düse Verwendung finden.

Ein wesentlicher Parameter zur Auswahl des Schutzgases beim Laserschweißen ist die Wellenlänge des auf das zu schweißende Werkstück fokussierten Laserstrahls. Bei dem zum Schweißen von Werkstücken am weitesten verbreiteten Lasertyp, dem CO₂-Laser, liegt die Wellenlänge im fernen Infrarot bei 10,6 µm. Als Prozessgas kommt bei CO₂-Lasern daher überwiegend Helium oder ein Gasgemisch mit einem hohen Anteil von Helium zum Einsatz, da Helium von der Strahlung des CO₂-lasers nicht ionisiert wird und somit kein den Schweißprozess störendes Schutzgasplasma ("Plasmafackel") ausbildet.

Stickstoff und Argon sind zwar vergleichsweise preisgünstig zur Verfügung stehende Gase, weisen aber die Nachteile auf, dass der Laserstrahl mit den Argonatomen wechselwirkt und so zur Ausbildung einer Plasmafackel führt und Stickstoff in hoher Konzentration als Stahlschädling bekannt ist. Die Neigung des Argons zur Plasmabildung, die beim Lichtbogenschweißen und auch beim Laser-Hybrid-Schweißen durchaus vorteilhaft ist, ist beim reinen Laserschweißen äußerst nachteilig, da sie den Wirkungsgrad des Schweißens verringert und die Laseroptik beschädigen kann. Aufgrund seiner Wellenlänge koppelt der Strahl des CO₂-lasers besonders gut an das Plasma an, was zu einem starken Energieverlust des Laserstrahls führt, wodurch die Eindringtiefe des Strahls in das Werkstück deutlich vermindert wird. Demgegenüber ist die Wechselwirkung von Festkörperlaserstrahlen mit Argon aufgrund der wesentlich geringeren Wellenlänge weitaus schwächer, weswegen hier die Verwendung von Argon als Prozessgas mit weniger Nachteilen verbunden ist.

Aus diesen Gründen wurden bislang für das CO₂-Laserschweißen zumindest von hochlegierten Stählen überwiegend Schutzgase verwendet, die einen erheblichen Anteil an Helium enthalten. Da Helium allerdings sehr teuer ist, wurde schon früh versucht, alternative Schutzgase zu finden, die zu ähnlich guten Schweißergebnissen führen. Beispielsweise wurde versucht, durch Beimischungen anderer Gase den Heliumgehalt zu senken, um so die Kosten für das Schutzgas zu reduzieren. So wird in der EP 1 022 087 A1 ein Schutzgas zum Laserstrahlschweißen, insbesondere zum Schweißen mit Kohlendioxidlasern beschrieben, das überwiegend aus Helium besteht, jedoch einen Anteil von bis zu 35 Vol.-% Kohlendioxid enthält. Aus der EP 1 084 788 B4 sind Schutzgase zum CO₂-Laserschweißen bekannt, die die Komponenten Helium und Wasserstoff enthalten; als beispielhafte Schutzgaszusammensetzungen werden angegeben: 20 bis 50 Vol.-% Helium und/oder Neon, 50 vpm (0,005 Vol.-%) bis 15,0 Vol.-% Wasserstoff und restlich Argon, oder 20 bis 50 Vol.-% Helium und/oder Neon, 50 vpm (0,005 Vol. -%) bis 15,0 Vol. -% Wasserstoff und restlich Stickstoff. Nachteilig bei all diesen Gemischen ist der immer noch recht hohe Anteil an teurem Helium.

In der EP 1 160 048 A1 werden verschiedene Schutzgasgemische untersucht, die für das Laser-Hybrid-Schweißen von nichtrostenden Stählen bestimmt sind. Diese Gemische bestehen aus Helium und/oder Argon mit geringen Beimengungen aus Wasserstoff, Stickstoff und/oder Kohlendioxid. Die in dieser Druckschrift beschriebenen Schutzgase sind jedoch insbesondere im Hinblick auf ihre für die Ausbildung eines Lichtbogens vorteilhafte plasmaerzeugende Wirkung optimiert und für den Einsatz beim reinen CO₂-Laserschweißen nicht oder nicht ohne weiteres geeignet.

In der DE 196 16 844 B4 wurde vorgeschlagen, die Bildung der Plasmafackel durch Zusatz von bis zu 25 Vol.-% Wasserstoff in einem im Übrigen aus Argon bestehenden Schutzgas zu unterdrücken. Durch den Wasserstoffzusatz wird die Ausbildung der Plasmafackel zwar deutlich reduziert, das Schweißergebnis ist jedoch nicht mit dem Ergebnis vergleichbar, das bei Verwendung von Helium als Prozessgas erzielt wird.

Der Erfindung liegt somit die Aufgabe zugrunde, eine vergleichsweise preisgünstiges Prozessgas für das CO₂-Laserschweißen von hochlegierten Stählen zu entwickeln, bei dem die Ausbildung einer Plasmafackel unterdrückt und zugleich ein mit der Verwendung eines heliumhaltigen Gasgemisches vergleichbares Schweißergebnis erzielt wird.

Die Aufgabe der Erfindung wird durch ein Verfahren zum CO₂-Laserschweißen mit den Merkmalen des Patentanspruchs 1 gelöst. Vorteilhafte Ausgestaltungen der Erfindung ergeben sich aus den Unteransprüchen.

Erfindungsgemäß kommt als Prozessgas ein Gasgemisch, bestehend aus 10-20 Vol.-% Kohlendioxid, 5-10 Vot.-% Wasserstoff, 0-20 Vol.% Stickstoff, Rest Argon, zum Einsatz. Das erfindungsgemäße Schutzgas ist besonders für das CO₂-Laserschweißen von hochlegierten Stählen, insbesondere von Cr-Ni-Stählen geeignet. Entgegen der beispielsweise in der EP 1 160 048 A1 geäußerten Ansicht, ein Schutzgas mit hohen Anteilen von Kohlendioxid sei beim CO₂-Laserschweißen aufgrund seiner Absorptionswirkung unvorteilhaft, lassen sich mit dem erfindungsgemäßen Schutzgas Ergebnisse mit einer Qualität erzielen, die mit denen bei Verwendung von Helium als Schutzgas vergleichbar sind.

Aufgrund der Anteile an Kohlendioxid und Wasserstoff im Schutzgas ist die Neigung zur Ausbildung einer Plasmafackel wesentlich geringer als bei Verwendung von reinem Argon. Beim Schweißen von 3 mm dicken Blechen und einer Laserleistung von 2 kW lässt sich bei Verwendung eines Schutzgases mit 30 Vol.-% bis 50 Vol.-% CO₂ in Argon das Ausbilden einer Plasmafackel sogar vollständig unterdrücken, jedoch sind Kohlendioxidgehalte von über 20 Vol.-% beim Schweißen von hochlegierten Stählen nachteilig, da sie zu einer Oxidation der Schweißnaht und der Wärmeeinflusszone führen. Das erfindungsgemäße ternäre Gemisch aus Argon, Kohlendioxid und Wasserstoff bzw. das erfindungsgemäße quaternäre Gemisch aus Argon, Kohlendioxid Wasserstoff und Stickstoff führt dagegen beim CO₂-Laserschweißen einerseits zu einer Unterdrückung der Plasmafackel, vermeidet jedoch andererseits die Oxidation der Schweißnaht.

Für hochlegierte CrNi-Stähle, insbesondere für hochlegierte, vollaustenitische Cr-Ni-Stähle, eignet sich dabei besonders ein ternäres Gasgemisch aus 10-20 Vol.-% Kohlendioxid, 5-10 Vol.-% Wasserstoff, Rest Argon als Schutzgas. Besonders bevorzugt sind dabei die Randbereiche 10-15 Vol.-% Kohlendioxid und/oder 8-10 Vol.-% Wasserstoff. Beispielsweise konnten an 3 mm dicken Blechen aus hochlegiertem, austenitischem Stahl besonders gute Schweißergebnisse mit einem Schutzgasgemisch aus 10% Wasserstoff und 1 0% Kohlendioxid, Rest Argon erzielt werden.

Für Duplexstähle dagegen ist ein quaternäres Gasgemisch aus 10-20 Vol.-% Kohlendioxid, 5-10 Vol.-% Wasserstoff, sowie 0,01 - 20 Vol.-% Stickstoff, Rest Argon vorteilhaft. Stickstoff ist ein Austenitbildner und wird häufig mit Anteilen bis zu 2,5 Vol.-% beim MAG- und WIG-Schweißen von Duplex-Stählen eingesetzt. Stickstoffkonzentration von über 20 Vol.-% führen dagegen zu hohen Energieverlusten und einer Verringerung der Eindringtiefe des Laserstrahls.

Das erfindungsgemäße Schutzgasgemisch führt zu Schweißnähten vergleichbarer Qualität wie bei der Verwendung von reinem Helium. Eine Reduzierung oder gar der Verzicht auf Helium wird in vielen Einsatzfällen möglich. Hierdurch wird der Einsatz des CO₂-lasers für den Anwender wirtschaftlicher und er ist in vielen Fällen nicht mehr gezwungen, den CO₂-Laser durch andere Strahlquellen zu ersetzen.

## Patentansprüche

1. Verfahren zum Laserschweißen eines metallischen Werkstücks unter Verwendung eines CO₂-Lasers, bei dem während des Schweißens die Schweißstelle von einem Schutzgas umspült wird,
**dadurch gekennzeichnet, dass** als Schutzgas ein Gasgemisch, bestehend aus 10-20 Vol.-% Kohlendioxid, 5-10 Vol.-% Wasserstoff, 0-20 Vol.% Stickstoff, Rest Argon, eingesetzt wird.

2. Verfahren nach Anspruch 1, **dadurch gekennzeichnet, dass** das Schutzgas 10-20 Vol.-% Kohlendioxid, 5-10 Vol.-% Wasserstoff, Rest Argon enthält.

3. Verfahren nach Anspruch 1, **dadurch gekennzeichnet, dass** das Schutzgas 10-20 Vol.-% Kohlendioxid, 5-10 Vol.-% Wasserstoff sowie 0,1-20 Vol.-% Stickstoff, Rest Argon enthält.

4. Verfahren nach einem der vorhergehenden Ansprüche, **dadurch gekennzeichnet, dass** das metallische Werkstück aus einem hochlegierten Stahl besteht.

## Claims

1. Method for laser welding a metallic workpiece using a CO₂ laser, in which the welding location is bathed in a shielding gas during the welding, **characterized in that** a gas mixture, consisting of 10-20% by volume carbon dioxide, 5-10% by volume hydrogen, 0-20% by volume nitrogen and for the remainder argon, is used as the shielding gas.

2. Method according to Claim 1, **characterized in that** the shielding gas contains 10-20% by volume carbon dioxide, 5-10% by volume hydrogen and for the remainder argon.

3. Method according to Claim 1, **characterized in that** the shielding gas contains 10-20% by volume carbon dioxide, 5-10% by volume hydrogen and 0.1-20% by volume nitrogen and for the remainder argon.

4. Method according to one of the preceding claims, **characterized in that** the metallic workpiece consists of a high-alloy steel.

## Revendications

1. Procédé de soudage au laser d'une pièce métallique en utilisant un laser au CO₂, selon lequel l'emplacement de soudage est rincé par un gaz protecteur pendant le soudage, **caractérisé en ce qu'**un mélange gazeux constitué par 10 à 20 % en volume de dioxyde de carbone, 5 à 10 % en volume d'hydrogène, 0 à 20 % en volume d'azote, le reste étant de l'argon, est utilisé en tant que gaz protecteur.

2. Procédé selon la revendication 1, **caractérisé en ce que** le gaz protecteur contient 10 à 20 % en volume de dioxyde de carbone, 5 à 10 % en volume d'hydrogène, le reste étant de l'argon.

3. Procédé selon la revendication 1, **caractérisé en ce que** le gaz protecteur contient 10 à 20 % en volume de dioxyde de carbone, 5 à 10 % en volume d'hydrogène, ainsi que 0,1 à 20 % en volume d'azote, le reste étant de l'argon.

4. Procédé selon l'une quelconque des revendications précédentes, **caractérisé en ce que** la pièce métallique est constituée d'un acier hautement allié.
